(19) Europäisches Patentamt
European Patent Office
Office européen des brevets

(11) **EP 4 172 559 B1**

(12) **EUROPÄISCHE PATENTSCHRIFT**

(45) Veröffentlichungstag und Bekanntmachung des Hinweises auf die Patenterteilung:
**14.02.2024  Patentblatt 2024/07**

(21) Anmeldenummer: **21790071.1**

(22) Anmeldetag: **15.09.2021**

(51) Internationale Patentklassifikation (IPC):
*G01B 11/06* (2006.01)  *G01B 11/08* (2006.01)
*G01B 11/12* (2006.01)  *G01N 21/21* (2006.01)
*G01B 11/14* (2006.01)  *G01N 21/3581* (2014.01)
*G01N 21/41* (2006.01)

(52) Gemeinsame Patentklassifikation (CPC):
**G01N 21/3581; G01B 11/06; G01B 11/08; G01B 11/12; G01B 11/14; G01N 21/21; G01N 21/41;** G01B 2210/44

(86) Internationale Anmeldenummer:
**PCT/DE2021/100761**

(87) Internationale Veröffentlichungsnummer:
**WO 2022/057980 (24.03.2022 Gazette 2022/12)**

(54) **THZ-MESSVORRICHTUNG UND THZ-MESSVERFAHREN ZUR VERMESSUNG VON PRÜFOBJEKTEN, INSBESONDERE ROHREN**

THZ MEASURING DEVICE AND THZ MEASUREMENT METHOD FOR MEASURING TEST OBJECTS, IN PARTICULAR PIPES

DISPOSITIF DE MESURE DE THZ ET PROCÉDÉ DE MESURE DE THZ POUR LA MESURE D'OBJETS À TESTER, EN PARTICULIER DES TUYAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2020  DE 102020123992**

(43) Veröffentlichungstag der Anmeldung:
**03.05.2023  Patentblatt 2023/18**

(73) Patentinhaber: **CiTEX Holding GmbH**
**49324 Melle (DE)**

(72) Erfinder:
• **KLOSE, Ralph**
**49324 Melle (DE)**

• **KLEVER, Jörg**
**49843 Halle (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
DE-A1-102018 118 097     US-A1- 2020 173 766
US-B2- 10 514 336

EP 4 172 559 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine THz-Messvorrichtung und ein THz-Messverfahren zur Vermessung von Prüfobjekten, insbesondere Rohren.

In THz-Messvorrichtungen und THz-Messverfahren wird THz-Strahlung von einem THz-Transceiver entlang einer optischen Achse durch einen Messraum mit einem aufgenommenen Prüfobjekt, z. B. einem Kunststoff-Strang oder Kunststoff-Rohr, geleitet und an den Grenzflächen des Prüfobjektes entlang der optischen Achse zurückreflektierte THz-Strahlung detektiert. Somit können Abstände, insbesondere zwischen Grenzflächen des Prüfobjektes, ermittelt werden. Aus den Teil-Reflexionspeaks der THz-Strahlung an den Grenzflächen des Prüfobjektes kann nachfolgend z. B. eine Schichtdicke und/oder ein Brechungsindex des Materials ermittelt werden.

Die Transceiver strahlen im Allgemeinen unpolarisiertes Licht, d. h. ohne Vorzugsrichtung der Schwingungsebenen der elektrischen Feldstärke, um hohe Signalintensitäten zu erhalten.

Die DE 20 2016 008 526 U1 beschreibt eine Vorrichtung zum Messen eines Durchmessers und/oder der Wanddicke eines im Querschnitt im Wesentlichen kreisförmigen und mittels Führungsmitteln in Längsrichtung seiner Längsachse durch die Vorrichtung geführten Strangs. Die Vorrichtung umfasst einen Sender zum Aussenden von Terahertz-Strahlung, wobei eine Strahlungsoptik vorgesehen ist, die von dem Sender ausgesandte Terahertz-Strahlung auf den Strang leitet und dem Sender gegenüberliegend in Strahlungsrichtung hinter dem Strang ein Reflektor für die Terahertz-Strahlung angeordnet ist. Weiterhin ist ein Empfänger zum Empfangen der von dem Strang oder dem Reflektor reflektierten Terahertz-Strahlung vorgesehen.

Die DE 10 2018 128 248 A1 beschreibt ein Verfahren zum Bestimmen des Brechungsindex eines rohrförmigen Körpers, wobei der Körper in einem Messbereich durch eine Sendeeinrichtung mit Messstrahlung im Giga- oder Terahertzfrequenzbereich bestrahlt und an Grenzflächen des Körpers reflektierte Messstrahlung durch eine Empfangseinrichtung detektiert wird, und wobei anhand der reflektierten Messstrahlung die optische Wanddicke mindestens eines Wandabschnitts des Körpers bestimmt wird, wobei der Außen- und Innendurchmesser sowie ein Brechungsindex des Körpers bestimmt werden.

DE 10 2018 118 097 A1 beschreibt eine Vorrichtung zur Bestimmung des Durchmessers und/oder der Außenkontur eines strangförmigen Gegenstandes, mit mindestens einer Sendeeinrichtung zum Aussenden von Messstrahlung, die durch den strangförmigen Gegenstand reflektiert wird, und einer Empfangseinrichtung zum Empfangen der reflektierten Messstrahlung, wobei anhand der empfangenen Messstrahlung der Durchmesser und/oder die Außenkontur des strangförmigen Gegenstandes bestimmt wird. Hierbei ist mindestens ein den strangförmigen Gegenstand zumindest abschnittsweise umgebender Retroreflektor vorgesehen, der die reflektierte Messstrahlung vollständig oder teilweise retroreflektiert.

US 10,514,336 B2 beschreibt eine THz-Messvorrichtung zum Vermessen eines Testobjektes, bei der THz-Strahlung in einem Raumwinkel entlang einer optischen Achse ausgestrahlt und reflektierte THz-Strahlung empfangen wird. Hierbei werden Defekte des Testobjektes aus der empfangenen THz-Strahlung ermittelt. Insbesondere ist es möglich, einen Kernbereich der ausgesandten THz-Strahlung abzuschirmen.

US 2020/0173766 A1 beschreibt eine THz-Messvorrichtung für Laufzeitmessungen eines Testobjektes, insbesondere für Schichtdickenmessungen und Abstandsmessungen, wobei THz-Strahlung entlang einer optischen Achse ausgegeben und empfangen wird, wobei ein Strahl-Teiler zum Aufteilen der emitierten THz-Strahlung in wenigstens eine erste Teilstrahlung und zweite Teilstrahlung mit unterschiedlichen optischen Achsen vorgesehen ist. Hierbei dient eine Reflexionseinrichtung dazu, die zweite Teilstrahlung entlang einer zweiten optischen Teilachse zu reflektieren, die von der ersten optischen Teilachse der ersten Teilstrahlung verschieden ist. Hierbei wird ein gemeinsames Messsignal aus den Teilstrahlen erzeugt und ausgewertet.

Der Erfindung liegt die Aufgabe zugrunde, eine THz- Messvorrichtung und ein THz-Messverfahren zu schaffen, die eine vielseitige Vermessung eines Prüfobjektes ermöglichen.

Diese Aufgabe wird durch eine THz-Messvorrichtung und ein THz-Messverfahren nach den unabhängigen Ansprüchen gelöst. Die Unteransprüche beschreiben bevorzugte Weiterbildungen. Weiterhin ist eine Messanordnung aus einer erfindungsgemäßen THz-Messvorrichtung und dem zu vermessenden Prüfobjekt, insbesondere einem im Endlosverfahren durch den Messraum der THz-Messvorrichtung geführten Prüfobjekt, vorgesehen. Das Prüfobjekt kann insbesondere ein Strang, z. B. Rohr oder Rechteckprofil sein, der durch den Messraum geführt wird, insbesondere senkrecht zur optischen Achse der THz-Transceiver.

Das erfindungsgemäße THz-Messverfahren ist insbesondere mit der erfindungsgemäßen THz-Messvorrichtung ausführbar. Die THz-Messvorrichtung ist insbesondere zur Ausführung des erfindungsgemäßen THz-Messverfahrens vorgesehen.

Erfindungsgemäß sind somit mindestens zwei THz-Transceiver-Einrichtungen vorgesehen, die jeweils THz-Strahlung einer bevorzugten Polarisation bzw. Polarisationsebene ausgeben, d.h. die THz-Strahlung ist jeweils ganz oder überwiegend in einer Ebene polarisiert, wobei die Polarisationsebenen verschieden, insbesondere orthogonal zueinander sind.

Somit können zwei THz-Transceiver Messungen durchführen, die sich gegenseitig nicht oder nicht relevant beeinflussen. Insbesondere können die THz-Transceiver einander gegenüberliegend angeordnet sein und THz-Strahlung ausgeben, die vom anderen THz-Transceiver nicht oder nicht relevant detektiert werden.

Gemäß einer bevorzugten Ausbildung sind polarisierte Referenzflächen, d.h. für polarisierte Strahlung selektiv wirkende Referenzflächen in dem Strahlengang bzw. in den optischen Achsen der THz-Transceiver vorgesehen. Die für polarisierte THz-Strahlung sensitiven Referenzflächen können insbesondere Spiegel sein, die Licht einer bevorzugten Polarisationsebene reflektieren und andere Polarisationsebenen, insbesondere die hierzu orthogonale Polarisationsebene, hindurchlassen. Ein derartiger selektiv wirkender Polarisations-spiegel kann insbesondere als Metallfläche mit Rillen bzw. Linien ausgebildet sein, die somit z.B. in einer Ebene schwingende THz-Strahlen im durchlassen, hierzu orthogonal verlaufende Strahlung jedoch abfangen.

Gemäß einer bevorzugten Ausbildung können somit Messungen auf der gleichen oder im Wesentlichen gleichen optischen Achse durchgeführt werden, d. h. mit einander gegenüberliegenden THz-Transceivern, die sich nicht beeinflussen, wobei die THz-Strahlung an einem zugehörigen selektiven Spiegel reflektiert wird, der die andere THz-Strahlung durchlässt. Der Messraum ist insbesondere zwischen dem Transceiver und dem zugehörigen Spiegel ausgebildet, so dass das Messobjekt durch den Messraum geführt wird und die erste THz-Strahlung vom ersten THz-Transceiver durch den zweiten Spiegel hindurch, dann durch den Messraum mit dem Messobjekt und zu dem dahinter liegenden ersten Spiegel gelangt und zurück reflektiert wird, und entsprechend umgekehrt für die zweite THz-Strahlung des ersten THz-Transceivers.

Eine derartige Messanordnung hat insbesondere den Vorteil, dass die Teil-Reflexionspeaks bzw. Messpeaks der beiden Messungen entlang der gleichen optischen Achse und an den gleichen Grenzflächen erfolgen und sich somit die beiden Messungen entsprechen, so dass die Messsignale bzw. Signalamplituden der beiden Messungen zueinander in Bezug gesetzt werden können. Somit können die beiden Signalamplituden zum einen miteinander verglichen werden, um Mittelungen durchzuführen. Weiterhin können z.B. die Totalreflexionspeaks der beiden Messsignale an den Spiegeln gemeinsam in die Auswertung einbezogen werden.

Neben Polarisations-Spiegeln können auch andere selektiv auf die Polarisationsebenen ansprechende Mittel eingesetzt werden, z.B. selektiv nur THz-Strahlung einer Polarisationsebene absorbierende Filter.

Das erfindungsgemäße Verfahren kann insbesondere derartig ausgeführt werden, dass das Prüfobjekt kontinuierlich durch den Messraum gefördert und vermessen wird, insbesondere nach der Herstellung, z. B. der Extrusion des Prüfobjektes.

Somit werden einige Vorteile erreicht. Es sind mehrere Messungen möglich, die sich gegenseitig nicht oder nicht relevant beeinflussen. Es können auch Messungen auf der gleichen optischen Achse von entgegengesetzten Seiten durchgeführt werden, wobei diese Messsignale gemeinsam ausgewertet werden können, um die Genauigkeit zu erhöhen. Weiterhin ist die Vermessung von Objekten und Materialien möglich, die für polarisierte THz-Strahlung selektiv wirken.

Der Frequenzbereich der THz-Strahlung liegt z.B. zwischen 10 GHz und 50 THz, z.B. zwischen 20, 30 oder 50 GHz und 10 THz oder 30 THz. Die THz-Strahlung bzw. elektromagnetische Mess-Strahlung liegt somit im GHz- oder THz-Bereich und umfasst somit vorteilhafterweise auch den Radarbereich und Mikrowellenbereich.

Die THz-Strahlung kann für eine direkte Laufzeitmessung, frequenzmodulierte Messung und/oder als gepulste Strahlung ausgegeben werden.

Die Erfindung wird im Folgenden anhand der beiliegenden Zeichnungen an einigen Ausführungsformen näher erläutert. Es zeigen:

Fig. 1    eine Messanordnung aus einer Messvorrichtung und einem Rohr als Prüfobjekt, mit Darstellung der Signalamplituden der Messsignale;

Fig. 2    eine erste polarisierte elektromagnetische Welle;

Fig. 3    eine gegenüber Fig. 2 orthogonal ausgerichtete zweite polarisierte Welle;

Fig. 4    eine Darstellung der Überlagerung der polarisierten Wellen;

Fig. 5    die Wirkung der Polarisations-Spiegel auf die THz-Strahlung.

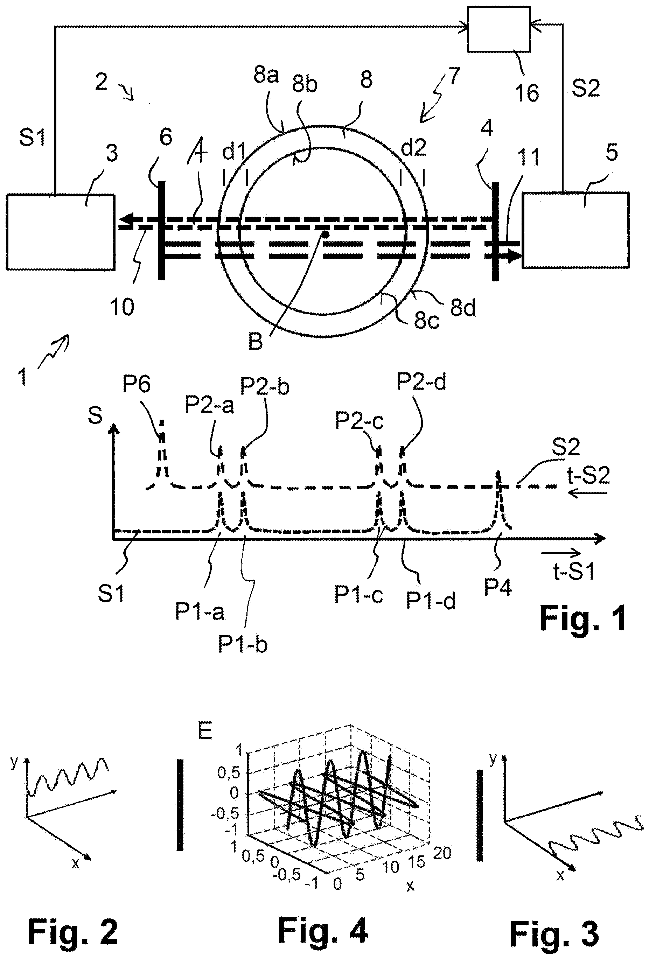

In Figur 1 ist eine Messanordnung 1 gezeigt, die eine THz-Messvorrichtung 2 aufweist, die wiederum einen ersten THz-Transceiver 3 und einen ersten Polarisations-Spiegel 4, sowie einen zweiten THz-Transceiver 5 und einen zweiten Polarisations-Spiegel 6 aufweist.

Zwischen den THz-Transceivern 3 und 5 sowie den Polarisations-Spiegeln 4 und 6 ist ein Messraum 7 ausgebildet, in dem ein Prüfobjekt, hier ein Rohr 8, aufgenommen und entlang seiner Rohrachse B, d.h. senkrecht zur Zeichenebene, kontinuierlich gefördert wird.

Der erste THz-Transceiver 3 sendet einen ersten THz-Strahl 10 entlang einer optischen Achse A aus, der in einer ersten Polarisations-Ebene polarisiert ist und durch den zweiten Polarisations-Spiegel 6 - im Wesentlichen ohne relevante Abschwächung - hindurchtritt. Der erste THz-Strahl 10 durchquert nachfolgend entlang der optischen Achse A den Messraum 7 und das Messobjekt 8, wobei er durch die Grenzflächen 8a bis 8d des Prüfobjektes 8 unter Ausbildung von Teil-Reflexionspeaks (Messpeaks) tritt. Nachfolgend gelangt der erste THz-Strahl 10 zu dem ersten Polarisations-Spiegel 4, an dem er aufgrund seiner Polarisation zurück entlang der optischen Achse A reflektiert wird und erneut durch den Messraum 7 mit dem Prüfobjekt 8 gelangt. Nachfolgend gelangt der erste THz-Strahl 10 durch den zweiten Polarisations-Spiegel 6, durch den er wiederum aufgrund seiner Polarisation im Wesentlichen ohne relevante Abschwächung hindurchtritt, und wird nachfolgend von dem ersten THz-Transceiver 3 aufgenommen, der daraufhin eine erste Signalamplitude S1 erzeugt.

Entsprechend gibt der zweite THz-Transceiver 5 einen zweiten THz-Strahl 11 aus, der entlang der optischen Achse A und mit gegenüber dem ersten THz-Strahl 10 entgegengesetzter Richtung, d.h. in Fig. 1 von rechts nach links, verläuft. Der zweite THz-Strahl 11 ist wiederum polarisiert, mit einer gegenüber der ersten Polarisation des ersten THz-Strahls 10 orthogonalen Polarisationsebene. Daher gelangt der zweite THz-Strahl 11 ohne relevante Abschwächung durch den ersten Polarisations-Spiegel 4, nachfolgend durch den Messraum 7 und unter Ausbildung von Teil-Reflexionspeaks (Messpeaks) durch die Grenzflächen 8a bis 8d des Prüfobjektes 8, und trifft nach Durchqueren des Messraums 7 gegen den zweiten Polarisations-Spiegel 6, an dem er aufgrund seiner Polarisation reflektiert wird und entsprechend entlang der optischen Achse A zurück durch den Messraum 7, das Prüfobjekt 8, sowie den ersten Polarisations-Spiegel 4 gelangt und wiederum von dem zweiten THz-Transceiver 5 detektiert wird, der daraufhin eine zweite Signalamplitude S2 erzeugt.

Der erste THz-Strahl 10 erzeugt beim Durchtritt durch die Grenzflächen 8a und 8b des ihm zugewandten Wandbereichs des Rohres 8 in der ersten Signalamplitude S1 entsprechende Messpeaks (Signalpeaks) P1-a und P1-b, dann nachfolgend nach Durchqueren des Innenraums des Rohres 8 beim Durchtritt durch die Grenzflächen 8c und 8d des hinteren Wandbereichs des Rohres 8 wiederum entsprechende Messpeaks (Signalpeaks) P1-c, P1-d.

Nachfolgend wird in der ersten Signalamplitude S1 durch die Totalreflexion am ersten Polarisations-Spiegel 4 ein erster Totalreflexions-Peak P4 erzeugt. Anschließend werden in der ersten Signalamplitude S1 beim erneuten Durchqueren des Messraums 7 wiederum Reflexionen an den Grenzflächen erzeugt, die hier zunächst nicht weiter beschrieben werden.

Entsprechend erzeugt der zweite THz-Strahl 11 beim Durchqueren des Messraums 7 durch Teil-Reflexion an den Grenzflächen 8d, 8c sowie nach Durchqueren des Innenraums des Rohres 8 an den Grenzflächen 8b, 8a entsprechende Messpeaks (Signalpeaks) P2-d, P2-c, P2-b und P2-a und nachfolgend bei der Totalreflexion an dem zweiten Polarisation-Spiegel 6 wiederum einen zweiten Totalreflexionspeak P6.

Aufgrund der unterschiedlichen Polarisation beeinflussen sich das erste und zweite Messsignal S1, S2 nicht oder nicht relevant, so dass hier zunächst separate Messungen auf der gleichen optischen Achse A und auch an den gleichen Wandbereichen und Grenzflächen vorgenommen werden können, die sich nicht gegenseitig stören, aber in Beziehung zueinander gesetzt werden können. Die beiden Signalamplituden S1 und S2 sind in dem Signaldiagramm der Figur 1 unten zur Veranschaulichung derartig mit entgegen gesetztem zeitlichen Verlauf dargestellt, dass sich die Messpeaks P1-a und P2-a, sowie die weiteren Messpeaks an gleichen Grenzflächen 8a bis 8d entsprechen. Hierdurch wird das Reflexionsverhalten an den Grenzflächen 8a bis 8d sowie den Polarisations-Spiegeln 4 und 6 veranschaulicht.

Für die Polarisationsebenen und das Reflexionsverhalten ist hier bzw. wird hier das jeweilige elektrische Feld E betrachtet; das magnetische B-Feld verläuft hierzu senkrecht, d.h. im Wesentlichen in der Ebene des elektrischen Feldes des jeweils anderen THz-Strahls. Figur 2 und Figur 3 zeigen elektromagnetische Strahlung oder THz-Strahlung mit zueinander senkrechten bzw. orthogonalen Polarisationsebenen, Figur 4 zeigt den kombinierten Verlauf der beiden THz-Strahlen.

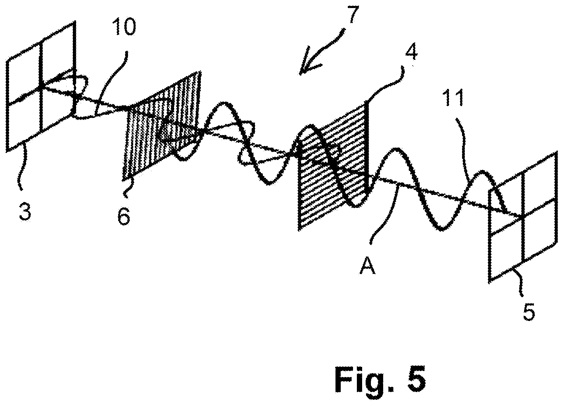

Figur 5 zeigt die Funktionsweise der Polarisations-Spiegel 4 und 6 unter Darstellung der Polarisationsebenen der THz-Strahlen 10 und 11. Die Polarisations-Spiegel 4 und 6 sind somit um 90° zueinander verdreht angeordnet und können insbesondere durch Rillen oder Linien in einer Metallfläche ausgebildet sein.

Die THz-Transceiver 3, 5 können kombinierte bzw. integrierte Sender und Empfänger sein; sie können jedoch auch getrennt jeweils einen Sender und Empfänger aufweisen, mit halbdurchlässigen Spiegeln. Die THz-Strahlen 10, 11 können für eine direkte Laufzeitmessung, frequenzmodulierte Messungen und/oder gepulste Strahlung ausgegeben werden, wobei die polarisierte Strahlung wiederum vorzugsweise durch in den Transceivern 3, 5 vorgesehene interne bzw. vorgeschaltete Polarisationsfilter erzeugt wird, die nur THz-Strahlung der jeweiligen Polarisation durchlassen.

Eine in Fig. 1 gezeigte Auswerteeinheit 16 nimmt das erste Messsignal S1 des ersten THz-Transceivers 3 und das zweite Messsignal S2 des zweiten THz-Transceivers 5 auf und setzt die Messsignale miteinander in Beziehung, um eine gemeinsame Auswertung zu ermöglichen. Hierzu kann der Auswerteeinheit 16 insbesondere gemäß der schematischen Darstellung der Signalamplituden in Figur 1 die Messsignale S1, S2 in zueinander inversem zeitlichen Verlauf setzen und somit die Teil-Reflexionspeaks an den Grenzflächen 8a, 8b, 8c, 8d zueinander in Beziehung setzen.

Somit kann in dem kombinierten Messsignal aus den Totalreflexions-Peaks P4 am ersten Polarisations-Spiegel 4 und P6 am zweiten Polarisations-Spiegel 6 auch der Abstand zwischen den Polarisations-Spiegel 4 und 6 ermittelt werden, z.B. für eine Kalibriermessung bei leerem Messraum 7 und nachfolgende Messung bei aufgenommenen Prüfobekt 8, wodurch eine genaue Bestimmung von sowohl Schichtdicken als auch dem Brechungsindex ermöglicht wird.

Erfindungsgemäß können eine Schichtdicke d1 des vorderen Wandbereichs zwischen den Grenzflächen 8a und 8b, eine Schichtdicke d2 des hinteren Wandbereichs zwischen den Grenzflächen 8c und 8d, und der Innendurchmesser als Schicht zwischen den Grenzflächen 8b und 8c, sowie der Brechungsindex n des Materials des Prüfrohrs 8 ermittelt werden.

So können bei bekanntem Brechungsindex n die Schichtdicken d1, d2 direkt aus dem zeitlichen Abstand der Teil-Reflexionspeaks eines Messsignals S1 oder S2, oder auch zur Erhöhung der Genauigkeit aus gemittelten Werten dieser beiden Messungen aufgrund der Formel

$$d = c_8 * \Delta t = c_0/n * \Delta t,$$

mit d= Schichtdicke, $c_0$ = Lichtgeschwindigkeit im Vakuum, n = Brechungsindex des Materials des Rohrs 8, $c_8$ = Lichtgeschwindigkeit im Material des Prüfrohrs 8, $\Delta t$ Zeitdifferenz zwischen den Messpeaks, z.B. zwischen P1-a und P1-b oder P2-a und P2-b, oder aus diesen gemittelten Werten. Weiterhin kann auch der Durchmesser des Innenraums des Rohrs 8, d. h. die Schicht zwischen den Grenzflächen 8b und 8c, sowie der Außendurchmesser des Rohres 8 ermittelt werden.

Bei einer Messung mit ergänzender Kalibriermessung bzw. Leermessung wird vor Einführung des Prüfobjektes 8 in den Messraum 7 der Zeitpunkt des Totalreflexionspeaks P4 des ersten THz-Strahls 10 am ersten Reflexions-Spiegel 4 und entsprechend der Zeitpunkt des Totalreflexionspeaks P6 des zweiten THz-Strahls 11 am zweiten Reflexions-Spiegel 6 ermittelt, und nachfolgend bei aufgenommenem Prüfrohr 8 die Zeitverzögerung der Messpeaks P4 und P6 gegenüber der Kalibriermessung ermittelt, um die gesamte zeitliche Verzögerung bei Durchqueren der Wandbereiche des Prüfobjektes 8 zu ermitteln, so dass aus der Kalibriermessung und den nachfolgenden Messungen sowohl Schichtdicken als auch Brechungsindizes ermittelt werden können.

Bezugszeichenliste

| 1 | Messanordnung |
|---|---|
| 2 | THz-Messvorrichtung |
| 3 | erster THz-Transceiver |
| 4 | erster Polarisations-Spiegel |
| 5 | zweiter THz-Transceiver |
| 6 | zweiter Polarisations-Spiegel |
| 7 | Messraum |
| 8 | Prüfobjekt, hier Rohr |
| 8a bis 8d | Grenzflächen, Oberflächen des Rohres 8 |
| 10 | erster THz-Strahl mit erster Polarisationsebene |
| 11 | zweiter THz-Strahl mit zweiter Polarisationsebene |
| S1 | erste Signalamplitude |
| S2 | zweite Signalamplitude |
| A | optische Achse |
| B | Rohrachse |
| P1-a bis P1-d | erste Messpeaks, Teil-Reflexionspeaks des ersten THz-Strahls 10 an |

den Grenzflächen 8a bis 8d

| P2-a bis P2-d | zweite Messpeaks, Teil-Reflexionspeaks des zweiten THz-Strahls 11 an den Grenzflächen 8a bis 8d |
|---|---|

**Patentansprüche**

1. THz-Messvorrichtung (2) zur Vermessung eines Prüfobjektes (8), insbesondere eines Rohres (8), wobei die THz-Messvorrichtung (2) aufweist:

einen ersten THz-Transceiver (3), der ausgebildet ist, einen ersten THz-Strahl (10) mit einer ersten Polarisationsebene entlang einer optischen Achse (A) in einer ersten Richtung durch einen Messraum (7) der Messvorrichtung (2) auszugeben,
einen zweiten THz-Transceiver (5), der ausgebildet ist, einen zweiten THz-Strahl (11), der in einer von der ersten Polarisationsebene verschiedenen zweiten Polarisationsebene polarisiert ist, entlang der optischen Achse (A) auszugeben,
einen ersten Polarisations-Spiegel (4), der ausgebildet ist, den durch den Messraum (7) gelangten ersten THz-Strahl (10) entlang der optischen Achse (A) zurück zu dem ersten THz-Transceiver (3) zu reflektieren und den zweiten THz-Strahl (11) zumindest teilweise durchzulassen,
einen zweiten Polarisations-Spiegel (6), der ausgebildet ist, den durch den Messraum (7) gelangten zweiten THz-Strahl (11) entlang der optischen Achse (A) zurück zu dem zweiten Transceiver (5) zu reflektieren und den ersten THz-Strahl (10) zumindest teilweise durchzulassen,
eine Auswerteeinheit (16), die ausgebildet ist, ein erstes Messsignal (S1) des ersten THz-Transceivers (3) und ein zweites Messsignal (S2) des zweiten THz-Transceivers (5) aufzunehmen, erste Messpeaks (P1-a bis P1-d, P4) des ersten Messsignals (S1) und zweite Messpeaks (P2-a bis P2-d, P6) des zweiten Messsignals (S1, S2) zu ermitteln und Schichtdicken (d1, d2) und/oder einen Brechungsindex (n) des Prüfobjektes (8) zu ermitteln.

2. THz-Messvorrichtung (2) nach Anspruch 1, **dadurch gekennzeichnet, dass** die erste Polarisationsebene des ersten THz-Strahls (10) und die zweite Polarisationsebene des zweiten THz-Strahls (11) orthogonal zueinander verlaufen, und/oder eine für Reflexionen aktive erste Polarisationsebene des ersten Polarisations-Spiegels (4) und eine für Reflexionen aktive zweite Polarisationsebene des zweiten Polarisations-Spiegels (6) orthogonal zueinander verlaufen.

**3.** THz-Messvorrichtung (2) nach einem der vorherigen Ansprüche, **dadurch gekennzeichnet, dass**

die erste Strahlungsrichtung des ersten THz-Strahl (10) und eine zweite Strahlungsrichtung des zweiten THz-Strahls (11) entgegengesetzt sind und/oder
der erste THz-Transceiver (3) und der zweite THz-Transceiver (5) einander gegenüber liegend mit dem Messraum (7) zwischen ihnen angeordnet sind.

**4.** THz-Messvorrichtung (2) nach Anspruch 3, **dadurch gekennzeichnet, dass**

der erste Polarisations-Spiegel (4) zwischen dem zweiten THz-Transceiver (5) und dem Messraum (7) und/oder
der zweite Polarisations-Spiegel (6) zwischen dem ersten THz-Transceiver (3) und dem Messraum (7) angeordnet ist.

**5.** THz-Messvorrichtung (2) nach einem der vorherigen Ansprüche, **dadurch gekennzeichnet, dass** zusätzlich zu dem ersten und zweiten THz-Transceiver (3, 5) weitere THz-Transceiver entlang weiterer optischer Achsen, insbesondere zentral durch eine Symmetrieachse (B) oder einen mittleren Bereich des Messraums (7) gerichtet, vorgesehen sind.

**6.** THz-Messvorrichtung (2) nach einem der vorherigen Ansprüche, **dadurch gekennzeichnet, dass** der erste und zweite THz-Strahl (10, 11) in überschneidenden oder gleichen Frequenzbereichen ausgebildet sind, insbesondere zwischen 10 GHz und 50 THz, vorzugsweise zwischen 50 GHz und 10 THz, z.B. zwischen 50 GHz und 4 THz,
insbesondere als direkte Laufzeitmessung, für frequenzmodulierte Messungen und/oder gepulste Strahlung.

**7.** THz-Messvorrichtung (2) nach einem der vorherigen Ansprüche, **dadurch gekennzeichnet, dass** die Auswerteeinheit (16) die beiden Messsignale (S1, S2) zueinander in Beziehung setzt, z.B.

sich entsprechende erste und zweite Messpeaks der beiden Messsignale (S1, S2) zueinander in Beziehung setzt und/oder
eine Mittelung über Messpeaks oder über Zeitdifferenzen zwischen Messpeaks der beiden Messsignale durchführt, die gleichen Schichtdicken entsprechen.

**8.** THz-Messvorrichtung (2) nach Anspruch 7, **dadurch gekennzeichnet, dass** die Auswerteeinheit (16) ausgebildet ist,

die THz-Transceiver (3, 5) für miteinander koordinierte Messungen anzusteuern, und/oder eine Kalibriermessung beider THz-Transceiver ohne aufgenommenes Prüfobjekt (8) anzusteuern und mit der nachfolgenden Messung des Prüfobjektes (8) in Beziehung zu setzen, um sowohl Schichtdicken als auch einen Brechungsindex (n) zu bestimmen.

**9.** Messanordnung (1) aus einer THz-Messvorrichtung (2) nach einem der vorherigen Ansprüche und einem in dem Messraum (7) aufgenommenen Prüfobjekt (8), insbesondere einem Profil, z. B. Rechteckprofil oder Rohr (8), aus einem für den THz-Strahl (10, 11) zumindest teilweise transparentem Material, z. B. Kunststoff, Papier, biologischem Material oder Gummi.

**10.** Messanordnung (1) nach Anspruch 9, **dadurch gekennzeichnet, dass** das Prüfobjekt (8) zumindest einen für THz-Strahlung unterschiedlicher Polarisation unterschiedlich durchlässigen Bereich aufweist.

**11.** Messanordnung (1) nach Anspruch 9 oder 10, **dadurch gekennzeichnet, dass** weiterhin eine Fördereinrichtung zum Befördern des Prüfobjektes (8) durch den Messraum (7) in einer zu der optischen Achse (A) orthogonalen Richtung (B) vorgesehen ist, zur fortlaufenden zeitlichen Vermessung des Prüfobjektes (8).

**12.** THz-Messverfahren zur Vermessung eines Prüfobjektes (8), insbesondere eines Rohres (8), mit folgenden Schritten:

Aussenden eines ersten THz-Strahls (1), der in einer ersten Polarisationsebene polarisiert ist, entlang einer optischen Achse (A) durch einen Messraum (7) mit einem Prüfobjekt (8) und nachfolgend zu einem ersten Polarisations-Spiegel (4), an dem der erste THz-Strahl (10) entlang der optischen Achse (A) zurück reflektiert wird entlang der optischen Achse durch den Messraum (7) und zu dem ersten THz-Transceiver (3), der ein erstes Messsignal (S1) ausgibt,
zumindest teilweise zeitgleiches oder sich zeitlich überschneidendes Ausgeben eines zweiten THz-Strahls (11), der in einer von der ersten Polarisationsebene ungleichen zweiten Polarisationsebene polarisiert ist, von einem zweiten THz-Transceiver (5) entlang der optischen Achse (A) durch den Messraum (7) mit dem Prüfobjekt (8) und zu einem zweiten Polarisations-Spiegel (6), der den zweiten THz-Strahl (11) entlang der optischen Achse (A) zurückreflektiert zu dem zweiten THz-Transceiver (5), der ein zweites Messsignal (S2) ausgibt,

Auswerten des ersten Messsignals (S1) und des zweiten Messsignals (S2), wobei mindestens eine Schichtdicke (d1, d2) und/oder ein Brechungsindex (n) des Prüfobjektes (8) ermittelt wird.

13. THz-Messverfahren nach Anspruch 12, **dadurch gekennzeichnet, dass** der erste THz-Strahl (1) und der zweiten THz-Strahl (11) in entgegengesetzten Strahlrichtungen entlang der optischen Achse (a) ausgegeben werden.

14. THz-Messverfahren nach Anspruch 12 oder 13, **dadurch gekennzeichnet, dass** die erste Polarisationsebene des ersten THz-Strahls (10) gegenüber der zweiten Polarisationsebene des zweiten THz-Strahls (11) orthogonal verläuft.

15. THz-Messverfahren nach einem der Ansprüche 12 bis 14, **dadurch gekennzeichnet, dass** der vom ersten THz-Transceiver (3) ausgegebene erste THz-Strahl (10) zunächst durch den zweiten Polarisations-Spiegel (6) und nachfolgend durch den Messraum (7) mit dem Prüfobjekt (8) tritt, und der vom zweiten THz-Transceiver (5) ausgegebene zweite THz-Strahl (11) zunächst durch den ersten Polarisations-Spiegel (4) und nachfolgend durch den Messraum (7) mit dem Prüfobjekt (8) tritt,

wobei der erste Polarisations-Strahl (10) aufgrund der ersten Polarisationsebene am zweiten Polarisations-Spiegel (6) nicht oder nicht relevant reflektiert wird, und
wobei der zweite Polarisations-Strahl (11) aufgrund der zweiten Polarisationsebene am ersten Polarisations-Spiegel (4) nicht oder nicht relevant reflektiert wird.

16. THz-Messverfahren nach einem der Ansprüche 12 bis 15, **dadurch gekennzeichnet, dass** eine gemeinsame Auswertung der beiden Messsignale (S1, S2) erfolgt, bei der die Messsignale (S1, S2) zueinander in Beziehung gesetzt werden.

17. THz-Messverfahren nach Anspruch 16, **dadurch gekennzeichnet, dass** im ersten Messsignal (S1) erste Teil-Reflexionspeaks (P1-a bis P1-d) des ersten THz-Strahls (10) an Grenzschichten (8a, 8b, 8c, 8d) des Prüfobjektes (8) detektiert oder ermittelt werden, und ein Haupt-Reflexionspeak (P4) am ersten Polarisations-Spiegel (4) detektiert oder ermittelt wird, und entsprechend im zweiten Messsignal (S2) zweite Teil-Reflexionspeaks (P2-a bis P2-d) an den Grenzflächen (8a bis 8d) des Prüfobjektes (8) und ein Haupt-Reflexionspeak (P6) am zweiten Polarisations-Spiegel (6) detektiert werden, und zumindest einige der Teil-Reflexionspeaks der beiden Messsignale (S1, S2) zueinander in Beziehung oder gleich gesetzt werden, insbesondere zur Mittelung einer Schichtdicke aus den beiden Messungen.

**Claims**

1. THz measuring device (2) for measuring a test object (8), in particular a pipe (8), the THz measuring device (2) comprising:

a first THz transceiver (3) designed to output a first THz beam (10) with a first polarization plane along an optical axis (A) in a first direction through a measuring chamber (7) of the measuring device (2),
a second THz transceiver (5) designed to emit a second THz beam (11),
polarized in a second polarization plane different from the first polarization plane, along the optical axis (A),
a first polarization mirror (4) designed to reflect the first THz beam (10),
which has travelled through the measuring chamber (7) along the optical axis (A), back to the first THz transceiver (3), and to allow the second THz beam (11) to pass, at least in part,
a second polarization mirror (6) designed to reflect the second THz beam (11), which has travelled through the measuring chamber (7), along the optical axis (A) back to the second transceiver (5), and to allow the first THz beam (10) to pass, at least in part,
an evaluation unit (16) designed to receive a first measuring signal (S1) of the first THz transceiver (3) and a second measuring signal (S2) of the second THz transceiver (5), determine first measuring peaks (P1-a through P1-d, P4) of the first measuring signal (S1) and second measuring peaks (P2-a through P2-d, P6) of the second measuring signal (S1, S2) and layer thicknesses (d1, d2) and/or a refractive index (n) of the tested object (8).

2. THz measuring device (2) according to claim 1, **characterized in that** the first polarization plane of the first THz beam (10) and the second polarization plane of the second THz beam (11) run orthogonally in relation to one another, and/or
a first polarization plane of the first polarization mirror (4) which is active for reflections and a second polarization plane of the second polarization mirror (6) which is active for reflections run orthogonally in relation to one another.

3. THz measuring device (2) according to one of the above claims, **characterized in that**

the first beam direction of the first THz beam (10) and a second beam direction of the second THz beam (11) are opposite,

and/or

the first THz transceiver (3) and the second THz transceiver (5) are arranged opposite one another with the measuring chamber (7) in-between them.

4. THz measuring device (2) according to claim 3, **characterized in that**

the first polarization mirror (4) is arranged between the second THz transceiver (5) and the measuring chamber (7), and/or

the second polarization mirror (6) is arranged between the first THz transceiver (3) and the measuring chamber (7).

5. THz measuring device (2) according to one of the above claims, **characterized in that,** in addition to the first and second THz transceivers (3, 5), further THz transceivers are provided, directed along further optical axes, in particular centrally through an axis of symmetry (B) or a middle region of the measuring chamber (7).

6. THz measuring device (2) according to one of the above claims, **characterized in that** the first and second THz beams (10, 11) are formed in overlapping or identical frequency bands,

in particular, between 10 GHz and 50 THz, preferably between 50 GHz and 10 THz, e.g., between 50 GHz and 4 THz,

in particular, as a direct time-of-flight measurement, for frequency modulated measurements and/or pulsed radiation.

7. THz measuring device (2) according to one of the above claims, **characterized in that** the evaluation unit (16) correlates the two measuring signals (S1, S2) with each other, e.g.,

correlates corresponding first and second measuring peaks of the two measuring signals (S1, S2) with each other and/or

carries out an averaging across measuring peaks or across time differences between measuring peaks of the two measuring signals, that correspond to identical layer thicknesses.

8. THz measuring device (2) according to claim 7, **characterized in that** the evaluation unit (16) is designed to,

control the THz transceiver (3, 5) for carrying out measurements coordinated with one another, and/or

trigger a calibration measurement of both THz transceivers without a test object (8) contained inside, and to correlates this with the subsequent measurement of the test object (8), so as to determine both layer thicknesses and a refractive index (n).

9. Measuring arrangement (1) consisting of a THz measuring device (2) according to one of the above claims and a test object (8) received in the measuring chamber (7), in particular a profile, e.g., rectangular profile, or pipe (8), made of a material at least partially transparent for the THz beam (10, 11), e.g., plastics, paper, organic material, or rubber.

10. Measuring arrangement (1) according to claim 9, **characterized in that** the test object (8) comprises at least one region transparent for THz radiation of different polarizations.

11. Measuring arrangement (1) according to claim 9 or 10, **characterized in that** further a conveyor means is provided for transporting the tested object (8) through the measuring chamber (7) in a direction (B) orthogonal to the optical axis (A), for continuous temporal measuring of the tested object (8).

12. THz measuring method for measuring a test object (8), in particular a pipe (8), including the following steps:

emitting a first THz beam (1) which is polarized in a first polarization plane along an optical axis (A) through a measuring chamber (7) with a test object (8) and subsequently to a first polarization mirror (4), on which the first THz beam (10) is reflected back along the optical axis (A), along the optical axis through the measuring chamber (7) and towards the first THz transceiver (3) which outputs a first measuring signal (S1),

at the same time or at least partially overlapping in time, putting out a second THz beam (11) which is polarized in a second polarization plane unequal to the first polarization plane, from a second THz transceiver (5) along the optical axis (A) through the measuring chamber (7) with the test object (8) and towards a second polarization mirror (6) which reflects the second THz beam (11) back along the optical axis (A) towards the second THz transceiver (5) which outputs a second measuring signal (S2),

evaluating the first measuring signal (S1) and the second measuring signal (S2), where at least one layer thickness (d1, d2) and/or a refractive index (n) of the tested object (8) is determined.

13. **THz** measuring method according to claim 12, **char-**

**acterized in that** the first THz beam (1) and the second THz beam (11) are output in opposite beam directions along the optical axis (a).

14. THz measuring method according to claim 12 or 13, **characterized in that** the first polarization plane of the first THz beam (10) runs orthogonal in relation to the second polarization plane of the second THz beam (11).

15. THz measuring method according to one of the claims 12 through 14, **characterized in that** the first THz beam (10) output by the first THz transceiver (3) first passes through the second polarization mirror (6) and subsequently through the measuring chamber (7) with the test object (8), and

the second THz beam (11) output by the second THz transceiver (5) first passes through the first polarization mirror (4) and subsequently through the measuring chamber (7) with the test object (8),

whereby the first polarization beam (10) is not or not to a relevant extent reflected on the second polarization mirror (6) due to the first polarization plane, and

whereby the second polarization beam (11) is not or not to a relevant extent reflected on the first polarization mirror (4) due to the second polarization plane.

16. THz measuring method according to one of the claims 12 through 15, **characterized in that** the two measuring signals (S1, S2) are evaluated together, whereby the measuring signals (S1, S2) are correlated with each other.

17. THz measuring method according to claim 16, **characterized in that** in the first measuring signal (S1) first partial reflection peaks (P1-a bis P1-d) of the first THz beam (10) at boundary layers (8a, 8b, 8c, 8d) of the tested object (8) are detected or determined, and a main reflection peak (P4) on the first polarization mirror (4) is detected or determined, and correspondingly, in the second measuring signal (S2) second partial reflection peaks (P2-a bis P2-d) at the boundary surfaces (8a bis 8d) of the tested object (8) and a main reflection peak (P6) on the second polarization mirror (6) are detected, and at least certain ones of the partial reflection peaks of the two measuring signals (S1, S2) are correlated with each other or equated, in particular, for averaging a layer thickness from the two measurements.

**Revendications**

1. Dispositif de mesure THz (2) pour mesurer un objet à tester (8), en particulier un tuyau (8), le dispositif de mesure THz (2) comprenant :

un premier émetteur-récepteur THz (3) conçu pour émettre un premier faisceau THz (10) avec un premier plan de polarisation le long d'un axe optique (A) dans une première direction à travers une chambre de mesure (7) du dispositif de mesure (2),

un deuxième émetteur-récepteur THz (5) conçu pour émettre un deuxième faisceau THz (11), qui est polarisé dans un deuxième plan de polarisation différent du premier plan de polarisation, le long de l'axe optique (A),

un premier miroir de polarisation (4) conçu pour réfléchir le premier faisceau THz (10), qui a parcouru la chambre de mesure (7) le long l'axe optique (A), en retour vers le premier émetteur-récepteur THz (3), et pour laisser passer, au moins en partie, le deuxième faisceau THz (11),

un deuxième miroir de polarisation (6) conçu pour réfléchir le deuxième faisceau THz (11), qui a parcouru la chambre de mesure (7) le long de l'axe optique (A), en retour vers le deuxième émetteur-récepteur (5), et pour laisser passer, au moins en partie, le premier faisceau THz (10),

une unité d'évaluation (16) conçue pour recevoir un premier signal de mesure (S1) du premier émetteur-récepteur THz (3) et un deuxième signal de mesure (S2) du deuxième émetteur-récepteur THz (5), déterminer des premiers pics de mesure (P1-a à P1-d, P4) du premier signal de mesure (S1) et des deuxièmes pics de mesure (P2-a à P2-d, P6) du deuxième signal de mesure (S1, S2) et déterminer des épaisseurs de couche (d1, d2) et/ou un indice de réfraction (n) de l'objet à tester (8).

2. Dispositif de mesure THz (2) selon la revendication 1,

**caractérisé en ce que** le premier plan de polarisation du premier faisceau THz (10) et le deuxième plan de polarisation du deuxième faisceau THz (11) s'étendent orthogonalement l'un par rapport à l'autre, et/ou un premier plan de polarisation du premier miroir de polarisation (4) qui est actif pour les réflexions et un deuxième plan de polarisation du deuxième miroir de polarisation (6) qui est actif pour les réflexions s'étendent orthogonalement l'un par rapport à l'autre.

3. Dispositif de mesure THz (2) selon l'une des revendications précédentes, **caractérisé en ce que**

la première direction de faisceau du premier faisceau THz (10) et une deuxième direction de faisceau du deuxième faisceau THz (11) sont opposées et/ou
le premier émetteur-récepteur THz (3) et le deuxième émetteur-récepteur THz (5) sont disposés l'un en face de l'autre avec la chambre de mesure (7) entre eux.

4. Dispositif de mesure THz (2) selon la revendication 3,
**caractérisé en ce que**

le premier miroir de polarisation (4) est disposé entre le deuxième émetteur-récepteur THz (5) et la chambre de mesure (7) et/ou
le deuxième miroir de polarisation (6) est disposé entre le premier émetteur-récepteur THz (3) et la chambre de mesure (7).

5. Dispositif de mesure THz (2) selon l'une des revendications précédentes, **caractérisé en ce que**, en plus des premier et deuxième émetteurs-récepteurs THz (3, 5), d'autres émetteurs-récepteurs THz sont prévus le long d'autres axes optiques, en particulier centralement par rapport à un axe de symétrie (B) ou une zone médiane de la chambre de mesure (7).

6. Dispositif de mesure THz (2) selon l'une des revendications précédentes, **caractérisé en ce que** les premier et deuxième faisceaux THz (10, 11) sont formés dans des bandes de fréquences superposées ou identiques, en particulier entre 10 GHz et 50 THz, de préférence entre 50 GHz et 10 THz, par exemple entre 50 GHz et 4 THz,
en particulier en tant que mesure de temps de trajet directe, pour des mesures modulées en fréquence et/ou rayonnement pulsé.

7. Dispositif de mesure THz (2) selon l'une des revendications précédentes, **caractérisé en ce que** l'unité d'évaluation (16) met en corrélation les deux signaux de mesure (S1, S2) entre eux, par exemple,

met en corrélation les premiers et deuxièmes pics de mesure correspondants des deux signaux de mesure (S1, S2) et/ou
effectue une moyenne sur les pics de mesure ou sur les différences de temps entre les pics de mesure des deux signaux de mesure correspondant à des épaisseurs de couche identiques.

8. Dispositif de mesure THz (2) selon la revendication 7, **caractérisé en ce que** l'unité d'évaluation (16) est conçue pour

commander l'émetteur-récepteur THz (3, 5) pour des mesures coordonnées entre elles, et/ou
commander une mesure d'étalonnage des deux émetteurs-récepteurs THz sans objet de test (8) inséré et établir la corrélation avec la mesure ultérieure de l'objet à tester (8), afin de déterminer à la fois les épaisseurs de couche et un indice de réfraction (n).

9. Agencement de mesure (1) consistant en un appareil de mesure THz (2) selon l'une des revendications précédentes, et un objet à tester (8) inséré dans la chambre de mesure (7), en particulier un profilé, par exemple un profilé rectangulaire ou un tuyau (8), constitué d'un matériau au moins partiellement transparent pour le faisceau THz (10, 11), par exemple du plastique, du papier, un matériau organique ou du caoutchouc.

10. Agencement de mesure (1) selon la revendication 9, **caractérisé en ce que** l'objet à tester (8) comprend au moins une zone différemment perméable pour un rayonnement THz de polarisations différentes.

11. Agencement de mesure (1) selon la revendication 9 ou 10, **caractérisé en ce que**, en outre, un dispositif de transport destiné à transporter l'objet à tester (8) à travers la chambre de mesure (7) dans une direction (B) orthogonale à l'axe optique (A), pour une mesure temporelle continue de l'objet à tester (8), est fourni.

12. Procédé de mesure THz pour mesurer un objet à tester (8), en particulier un tuyau (8), comprenant les étapes suivantes :

émettre un premier faisceau THz (1) qui est polarisé dans un premier plan de polarisation, le long d'un axe optique (A) à travers une chambre de mesure (7) comportant un objet à tester (8) et ensuite vers un premier miroir de polarisation (4), sur lequel le premier faisceau THz (10) est réfléchi en retour le long de l'axe optique (A), le long de l'optique axe à travers la chambre de mesure (7) et vers le premier émetteur-récepteur THz (3) qui délivre en sortie un premier signal de mesure (S1),
au moins partiellement en même temps ou en se chevauchant dans le temps, émettre un deuxième faisceau THz (11) qui est polarisé dans un deuxième plan de polarisation différent du premier plan de polarisation, à partir d'un deuxième émetteur-récepteur THz (5) le long de l'axe optique (A) à travers la chambre de mesure (7) comportant l'objet à tester (8) et vers un deuxième miroir de polarisation (6) qui réfléchit en retour le deuxième faisceau THz (11) le long de l'axe optique (A) vers le deuxième émetteur-récepteur THz (5) qui délivre en sortie un deuxième signal de mesure (S2),

évaluer le premier signal de mesure (S1) et le deuxième signal de mesure (S2), dans lequel au moins une épaisseur de couche (d1, d2) et/ou un indice de réfraction (n) de l'objet à tester (8) sont déterminés.

13. Procédé de mesure THz selon la revendication 12, **caractérisé en ce que** le premier faisceau THz (1) et le deuxième faisceau THz (11) sont délivrés en sortie dans des directions de faisceau opposées le long de l'axe optique (a).

14. Procédé de mesure THz selon la revendication 12 ou 13, **caractérisé en ce que** le premier plan de polarisation du premier faisceau THz (10) s'étend orthogonalement par rapport au deuxième plan de polarisation du deuxième faisceau THz (11).

15. Procédé de mesure THz selon l'une des revendications 12 à 14, **caractérisé en ce que** le premier faisceau THz (10) délivré en sortie par le premier émetteur-récepteur THz (3) passe d'abord à travers le deuxième miroir de polarisation (6) et ensuite à travers la chambre de mesure (7) comportant l'objet à tester (8), et le deuxième faisceau THz (11) délivré en sortie par le deuxième émetteur-récepteur THz (5) passe d'abord à travers le premier miroir de polarisation (4) et ensuite à travers la chambre de mesure (7) comportant l'objet à tester (8),

dans lequel le premier faisceau de polarisation (10) n'est pas, ou pas dans une mesure pertinente, réfléchi sur le deuxième miroir de polarisation (6) en raison du premier plan de polarisation, et

dans lequel le deuxième faisceau de polarisation (11) n'est pas, ou pas dans une mesure pertinente, réfléchi sur le premier miroir de polarisation (4) en raison du deuxième plan de polarisation.

16. Procédé de mesure THz selon l'une des revendications 12 à 15, **caractérisé en ce qu'**une évaluation commune des deux signaux de mesure (S1, S2) a lieu, selon laquelle une corrélation l'un avec l'autre des signaux de mesure (S1, S2) est établie.

17. Procédé de mesure THz selon la revendication 16, **caractérisé en ce que** les premiers pics de réflexion partielle (P1-a à P1-d) dans premier signal de mesure (S1) du premier faisceau THz (10) au niveau des interfaces (8a, 8b, 8c, 8d) de l'objet à tester (8) sont détectés ou déterminés, et un pic de réflexion principal (P4) sur le premier miroir de polarisation (4) est détecté ou déterminé, et en correspondance, des deuxièmes pics de réflexion partielle (P2-a à P2-d) dans le deuxième signal de mesure (S2) au niveau des interfaces (8a à 8d) de l'objet à tester (8) et un pic de réflexion principale (P6) sur le deuxième miroir de polarisation (6) sont détectés, et

au moins certains des pics de réflexion partielle des deux signaux de mesure (S1, S2) sont corrélés l'un avec l'autre ou égalisés, en particulier pour faire la moyenne d'une épaisseur de couche à partir des deux mesures.

**Fig. 1**

**Fig. 2**

**Fig. 4**

**Fig. 3**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202016008526 U1
- DE 102018128248 A1
- DE 102018118097 A1
- US 10514336 B2
- US 20200173766 A1